(19) Europäisches Patentamt
European Patent Office
Office européen des brevets

(11) Publication number: **0 395 361 A2**

(12) **EUROPEAN PATENT APPLICATION**

(21) Application number: 90304404.8

(22) Date of filing: 24.04.90

(51) Int. Cl.5: C08L 83/04, C08L 83/06, C08L 83/12, C08L 83/08

(30) Priority: 25.04.89 JP 105258/89

(43) Date of publication of application: 31.10.90 Bulletin 90/44

(84) Designated Contracting States: DE FR GB

(71) Applicant: **Shin-Etsu Chemical Co., Ltd.**
**6-1, Ohtemachi 2-chome**
**Chiyoda-ku Tokyo 100(JP)**

(72) Inventor: **Kuwata, Satoshi**
**117-104 Yanase**
**Annaka-shi, Gunma-ken(JP)**
Inventor: **Hirai, Motohiko**
**1610 Nishikamiisobe, Annaka-shi**
**Gunma-ken(JP)**

(74) Representative: **Moore, Anthony John et al**
**Gee & Co. Chancery House Chancery Lane**
**London WC2A 1QU(GB)**

(54) **Silicone composition.**

(57) A silicone fluid composition comprises a functional group-containing organopolysiloxane (I) having a viscosity of from 10 to 100,000 cSt blended with 0.01 to 500 wt% of an aromatic amino group-containing organopolysiloxane (II) to impart excellent thermal resistance in addition to a high affinity for surfaces of metal and/or metal oxide moldings.

EP 0 395 361 A2

# SILICONE COMPOSITION

This invention relates to a silicone fluid composition which has an excellent affinity for surfaces of metal moldings or moldings containing metal oxides, as well as excellent heat resistance, which ensures its fitness for applications in mold release and lubrication.

Hitherto, organopolysiloxane fluids represented by dimethylpolysiloxane have been predominantly used for the purposes of mold release, lubrication and so on. In these uses, various physical characteristics of such organopolysiloxane fluids, including excellent thermal resistance, excellent cold resistance, very low viscosity change, low surface tension and so on are fully utilised (as described in Plastic Zairyo Koza (9) - (which means "Lectures on Plastic Materials"), and Keiso Jushi (which means "Silicone Resins"), Page 49, Nikkan Kogyo Shinbun-sha). On the other hand, another representative characteristic of organopolysiloxanes lies in their low chemical reactivity. In recent years, however, they have been required to have an affinity to metal or metal oxide surfaces while retaining the above-cited characteristics including thermal resistance.

In such a situation, organopolysiloxanes containing amino or hydroxyl groups have so far been known to possess an affinity to metal or metal oxide surfaces. In particular, amino group-containing organopolysiloxanes have been widely used as a component capable of imparting a water-repelling property and durability to car waxes (e.g., as disclosed in U.S. Patents Nos. 3,549,590, 3,558,556 and 4,462,828, and Japanese Patent Koukai (which means unexamined published Japanese Patent Application) 64-12313).

However, the organopolysiloxanes having such functional groups as described above have the defect that they are poorer in thermal resistance under severe temperature conditions than general dimethylorganopolysiloxane fluid, so that they undergo heat oxidation to deteriorate quickly with an increase in viscosity, resulting in gelation in some cases. Consequently, these functional group-containing organopolysiloxanes are limited in their application to waxes, the surface treatment of textile fibres, and other relatively low temperature applications.

An object of this invention is to provide a silicone fluid composition which has not only excellent affinity for surfaces of metal and/or metal oxide moldings, but also excellent thermal resistance, mold release and lubricative properties.

Another object of this invention is to provide a method to make an amino or hydroxyl group-containing organopolysiloxane useful for applications where thermal resistance is required.

The above objects of this invention are attained with a silicone composition prepared by blending (1) 100 pts. wt. of a functional group-containing organopoly siloxane which is represented by the following general formula (I) and has a viscosity of from 10 to 100,000 cSt at 25°C, (2) from 0.01 to 500 pts. wt. of an aromatic amino group-containing organopolysiloxane represented by the general formula (II), and (3) from 0 to 10,000 pts. wt. of an organopolysiloxane which is represented by the general formula (III) and has a viscosity of from 10 to 100,000 cSt at 25°C.

As the silicone composition of this invention not only has excellent thermal resistance, but also excellent affinity for metal and metal oxide surfaces, it can be used in various ways, e.g., as a mold release agent to be used in working with plastics where high thermal resistance is required thereof, lubricating oil, and so on.

General formula (1) is as follows:

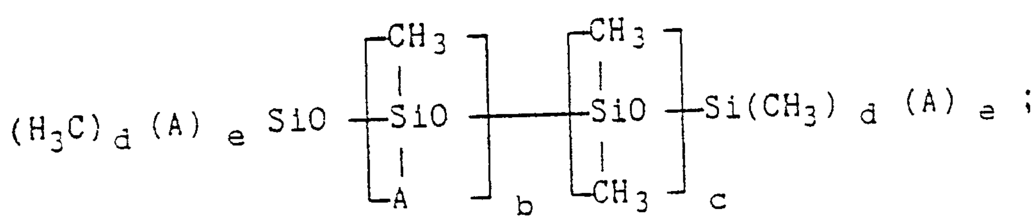

wherein A represents $-R^1-X$ or $-R^1-O-Y_f-H$, $R^1$ represents an alkylene group having 1 to 8 carbon atoms, X represents $-NH_2$ or $-NHR^2NH_2$, $R^2$ represents an alkylene group having 1 to 8 carbon atoms, Y represents an alkyleneoxy group having 2 to 4 carbon atoms; $0 \leq b \leq 10$, $10 \leq c \leq 1{,}000$, d = 2 or 3, e = 0 or 1, provided that d + e = 3, and the case of b = e = 0 is excluded; and $0 \leq f \leq 10$.

When b is larger than 10, the thermal resistance of the compound is very low, so that a sharp increase in thermal resistance cannot be hoped for even if the aromatic amino group-containing organopolysiloxane is added. In particular, a value of b of 2 or less is preferred.

When c is less than 10, the volatility of said organopolysiloxane increases to cause lack of durability

when used at high temperatures, whereas when it is larger than 1,000 said organopolysiloxane acquires a high viscosity which brings about a decrease in the rate at which the surface of metal or metal oxide moldings are wetted thereby. Consequently, such organopolysiloxanes cannot exhibit satisfactory characteristics. It is desirable in particular that c should range from 20 to 500.

When f is larger than 10, even the combined uses of said organopolysiloxanes and an aromatic amino group-containing organopolysiloxane cannot yield sufficient thermal resistance. In particular, it is desirable that f should be 3 or less.

The general formula (II) which represents the aromatic amino group-containing organopolysiloxanes is as follows:

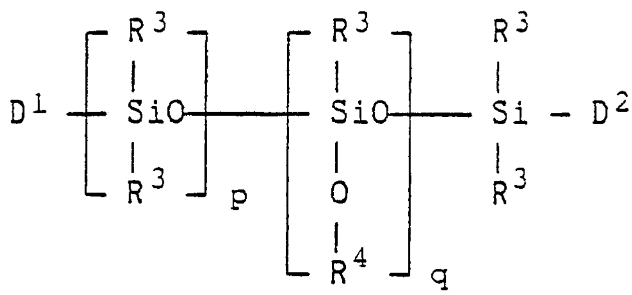

wherein $R^3$ represents an alkyl group having 1 to 8 carbon atoms or an aryl group; $R^4$ represents an aromatic amino group selected from among

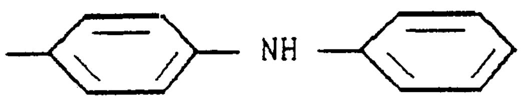

,

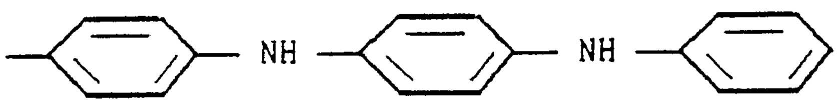

,

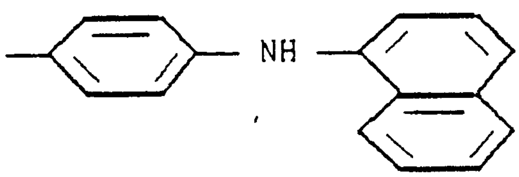

,

and

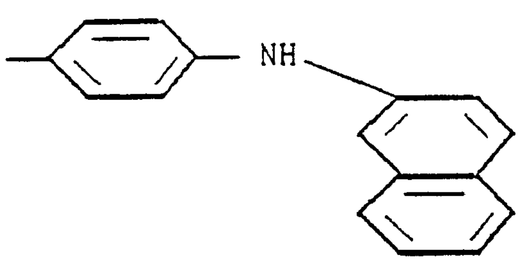

;

$D^1$ and $D^2$ each represents $R^3$ or $-O-R^4$;

$0 \leq p \leq 100$, $0 \leq q \leq 10$, provided that at least either $D^1$ or $D^2$ is $-O-R^4$ when $q = 0$.

Part of these organopolysiloxanes are disclosed in U.S. Patent No. 3,328,350, and a method for

preparing them comprises allowing aminophenols, such as

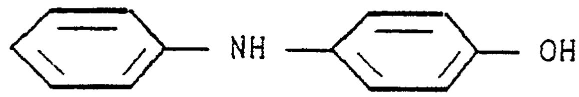

,

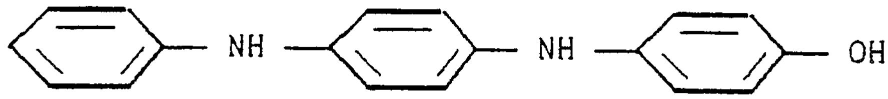

,

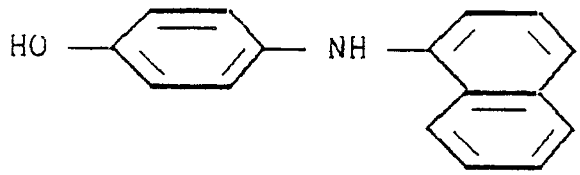

or

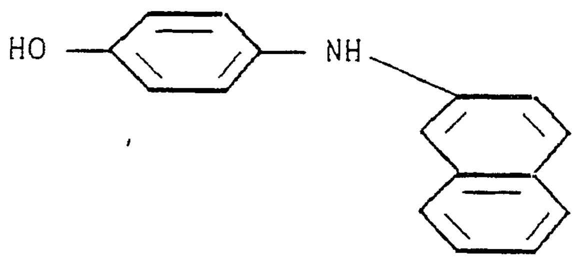

,

and those having at least one reactive group, such as chlorinated alkylpolysiloxanes, to undergo a condensation reaction in solvent of toluene in the presence of a hydrochloric acid capturer such as pyridine, triethylamine, picoline or so on, removing the produced hydrochloride salt, and heating the reaction mixture under reduced pressure to effect the stripping of the solvent.

When p is larger than 100 in an organopolysiloxane of the above-illustrated type, an increase in its blending amount is required for achieving the desired extent of thermal resistance enhancing effect. Consequently, as the resulting organopolysiloxane becomes impractical as additive, it is desirable that p should be not larger than 100. As for the q value, the organopolysiloxanes in which the q value is larger than 10 are inferior in solubilities in the mixtures of the foregoing organopolysiloxanes of the functional group-free type and those of the functional group-containing type, so it is necessary to design the organopolysiloxanes of this type so as to have a q value of 10 or less.

The amount of the aromatic amino group-containing organopolysiloxane used is adjusted to 0.01 to 500 pts. wt. per 100 pts. wt. of the functional group-containing organopolysiloxane. When the amount is less than 0.01 pt. wt., the addition effect thereof is insufficient, whereas even when the amount is increased beyond 500 pts. wt. an effect enhanced in proportion to the amount used cannot be expected, so that addition in such large amounts is of economical disadvantage.

A preferred amount of the aromatic amino group-containing organopolysiloxane added ranges from 0. 1 to 50 pts. wt..

The organopolysiloxane of the general formula ( III ) (which are called nonfunctional organopolysiloxanes, hereinafter) includes those represented by the formula

$$R^5{}_a SiO_{\frac{4-a}{2}}$$

wherein $R^5$ represents an alkyl group having 1 to 8 carbon atoms or aryl group, and $1.95 < a < 2.20$. More specifically, $R^5$ represents one or more of hydrocarbon residues chosen from alkyl groups including methyl, ethyl, propyl, butyl, pentyl, hexyl, heptyl and octyl groups, and aryl groups including phenyl and tolyl groups. Preferably, $R^5$ comprises methyl groups in an amount of 50 mol% or more.

A suitable blending amount of this nonfunctional organopolysiloxane is from 0 to 10,000 pts. wt. per 100 pts. wt. of the functional group-containing organopolysiloxane represented by the general formula (I).

That is, though it is not essential to add these nonfunctional organopolysiloxanes to the composition

from the viewpoint of the efficiency of the composition, they can be added from the view point of economy of the composition in an amount suitably chosen from the above-described range so as not to affect adversely the desired chracteristics.

As described above, thermal resistance of silicone compositions can be greatly improved by adding an aromatic amino group-containing organopolysiloxane in a small amount to amino or hydroxyl group-containing organopolysiloxane fluids which have so far been used for limited purposes because of their deficiency in thermal resistance.

## EXAMPLES

This invention will now be illustrated in greater detail by reference to the following Examples. However, the invention should not be construed as being limited to these Examples.

It should be noted that the viscosities in the following Examples were determined at 25 °C.

### Examples 1 to 8, and Comparative Examples 1 to 5

Sample oils prepared by blending aromatic amino group-containing organopolysiloxanes in their respective amounts as shown in Table 1 with 100 pts. wt. of amino or hydroxyl group-containing organopolysiloxanes set forth in Table 1, respectively, (but blending was not carried out in the Comparative Examples from 1 to 3), with stirring at room temperature, were subjected to the following thermal resistance test, and viscosities before and after the test were measured.

Thermal Resistance Test:

A 25 g portion of each sample oil was placed in a cleaned, 100 ml hard glass beaker, and kept for a prescribed period of time in a hot-air circulating oven regulated at 200 °C.

Table 1

Results of thermal resistance test

| No. | Functional group-containing organopolysiloxane | Aromatic amino group-containing organopolysiloxane | | Results of Viscosity Measurement (cSt) (numerical number in parentheses : percentage of viscosity change) | | |
|---|---|---|---|---|---|---|
| | | No. | amount blended (pt. wt.) | before test | thermal resistance test after 120 hours' | thermal resistance test after 240 hours' |
| Example 1 | Amino group-containing organopolysiloxane A | A | 0.1 | 315 | 360 (+14%) | 385 (+22%) |
| 2 | Amino group-containing organopolysiloxane B | A | 0.3 | 355 | 362 (+ 2%) | 375 (+ 6%) |
| 3 | Amino group-containing organopolysiloxane C | B | 0.1 | 290 | 350 (+21%) | 375 (+29%) |
| 4 | Amino group-containing organopolysiloxane D | C | 0.1 | 300 | 310 (+ 3%) | 330 (+10%) |
| 5 | Hydroxyl group-containing organopolysiloxane A | A | 0.1 | 185 | 200 (+ 8%) | 235 (+27%) |

continued

| | | | | | | |
|---|---|---|---|---|---|---|
| 6 | Hydroxyl group-containing organopolysiloxane B | B | 0.3 | 210 | 220 (+ 5%) | 250 (+19%) |
| 7 | Hydroxyl group-containing organopolysiloxane C | D | 0.1 | 230 | 240 (+ 4%) | 260 (+13%) |
| 8 | Hydroxyl group-containing organopolysiloxane D | A | 0.5 | 74 | 120 (+62%) | 2,300(+3,000%) |
| Comparative Example 1 | Amino group-containing organopolysiloxane A | — | 0 | 315 | 1,200(+280%) | Gelling |
| 2 | Hydroxyl group-containing organopolysiloxane A | — | 0 | 185 | 5,800(+3,000%) | Gelling |
| 3 | Hydroxyl group-containing organopolysiloxane D | — | 0 | 74 | Gelled after 2-day lapse | |
| 4 | Amino group-containing organopolysiloxane E | A | 0.6 | 450 | Gelled after 2-day lapse | |
| 5 | Hydroxyl group-containing organopolysiloxane E | A | 1.0 | 365 | Gelled after 2-day lapse | |

Examples 9 to 16:

Nonfunctional organopolysiloxanes, functional group-containing organopolysiloxanes and aromatic amino group-containing organopolysiloxanes were blended in their respective amounts set forth in Table 2, respectively, with stirring at room temperature to prepare sample oils. Thermal resistance of each sample oil was evaluated in the same manner as in Example 1, and the results obtained are shown in Table 2.

Table 2

Results of thermal resistance test

| Example No. | Blend composition: Nonfunctional OPS | | Blend composition: Functional group-containing OPS | | Aromatic amino group-containing OPS | | Results of Viscosity Measurement (cSt)(numerical number in parentheses : percentage of viscosity change) | | |
|---|---|---|---|---|---|---|---|---|---|
| | OPS | amount blended (pt. wt.) | No. | amount blended (pt. wt.) | No. | amount blended (pt. wt.) | before test | thermal resistance test after 120 hours' | thermal resistance test after 240 hours' |
| 9 | DMPS, TMS terminated (305 cSt) | 90 | Amino group-containing OPS F | 10 | A | 0.1 | 300 | 310(+ 3%) | 325(+ 8%) |
| 10 | DMPS, TMS terminated (305 cSt) | 80 | Amino group-containing OPS F | 20 | A | 0.3 | 290 | 315(+ 9%) | 380(+31%) |
| 11 | DMPS, TMS terminated (305 cSt) | 20 | Amino group-containing OPS C | 80 | B | 0.3 | 245 | 250(+ 2%) | 257(+ 5%) |

continued

| | | | | | | | | | |
|---|---|---|---|---|---|---|---|---|---|
| 12 | DMPS, TMS terminated (550 cSt) | 95 | Amino group-containing OPS G | 5 | D | 0.1 | 560 | 605(+ 8%) | 678(+21%) |
| 13 | DMPS, TMS terminated (305 cSt) | 50 | Hydroxy group-containing OPS D | 50 | A | 0.1 | 185 | 200(+ 8%) | 235(+27%) |
| 14 | DMPS, TMS terminated (305 cSt) | 20 | Hydroxy group-containing OPS D | 80 | A | 0.3 | 230 | 240(+ 4%) | 260(+13%) |
| 15 | DMPS, TMS terminated (305 cSt) | 95 | Hydroxy group-containing OPS B | 5 | B | 0.1 | 295 | 310(+ 5%) | 340(+15%) |
| 16 | DMPS, TMS terminated (550 cSt) | 25 | Hydroxy group-containing OPS B | 75 | D | 0.1 | 530 | 560(+ 6%) | 585(+10%) |

DMPS : Dimethylpolysiloxane TMS : Trimethylsiloxy OPS : Organopolysiloxane

Comparative Examples 6 to 13

Sample oils were prepared in the same manner as in Examples 9 to 16, except that no aromatic amino group-containing organopolysiloxane was added thereto, and thermal resistance of each sample oil was evaluated in the same way as in Examples 9 to 16. The results obtained are shown in Table 3.

Table 3

| Results of Thermal Resistance Test Viscosity Data (cs) (numerical values in parentheses: percentage of viscosity change) | | | |
|---|---|---|---|
| Comparative Example No. | Before Test | After 120-hour Lapse from Test | After 240-hour Lapse from Test |
| 6 | 300 | 620 (+110 %) | Gelled |
| 7 | 290 | 850 (+190 %) | Gelled |
| 8 | 245 | 750 (+210 %) | Gelled |
| 9 | 560 | 1020 (+ 82 %) | Gelled |
| 10 | 185 | 550 (+200 %) | Gelled |
| 11 | 230 | 2200 (+860 %) | Gelled |
| 12 | 295 | 580 (+ 97 %) | Gelled |
| 13 | 530 | 1800 (+240 %) | Gelled |

Comparative Examples 14 and 15

Compositions prepared by blending nonfunctional, functional group-containing and aromatic amino group-containing organopolysiloxanes in such prescribed amounts as shown in Table 4, and their thermal resistance was evaluated in the same way as in Example 9.

The aromatic amino group-containing organopolysiloxane used in these Comparative Examples was the same one as used in Example 1.

Table 4

Results of thermal resistance test

| Comparative Example No. | Blend composition | | | | Aromatic amino group-containing OPS | | Results of Viscosity Measurement (cSt) | |
|---|---|---|---|---|---|---|---|---|
| | Nonfunctional OPS | | Functional group-containing OPS | | | | | |
| | OPS | amount blended (pt.wt.) | No. | amount blended (pt.wt.) | No. | amount blended (pt.wt.) | before test | after 120 hours' thermal resistance test |
| 14 | DMPS, TMS terminated (305cSt) | 80 | Amino group-containing OPS E | 20 | A | 0.3 | 330 | Gelled |
| 15 | DMPS, TMS terminated (305cSt) | 80 | Hydroxy group-containing OPS E | 20 | A | 0.3 | 315 | Gelled |

DMPS : Dimethylpolysiloxane

TMS : Trimethylsiloxy

OPS : Organopolysiloxane

The average formulae of the organopolysiloxanes used in these Examples are those illustrated below.

Amino group-containing organopolysiloxane A;

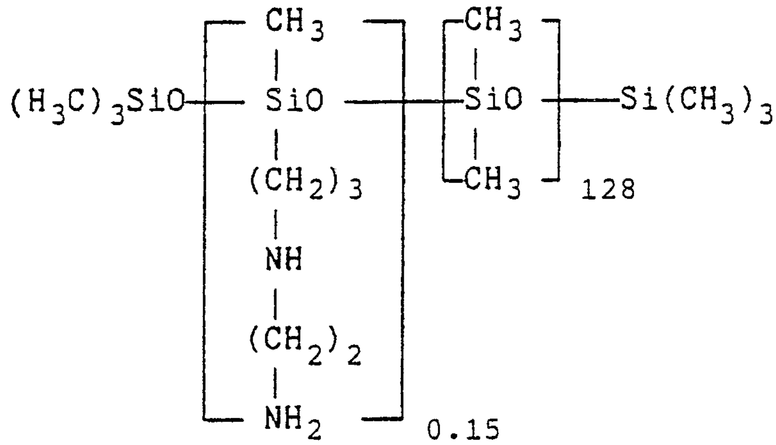

Amino group-containing organopolysiloxane B;

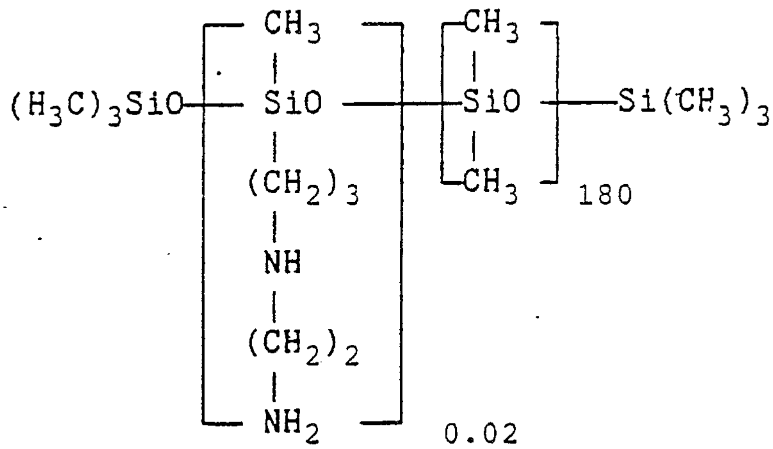

Amino group-containing organopolysiloxane C;

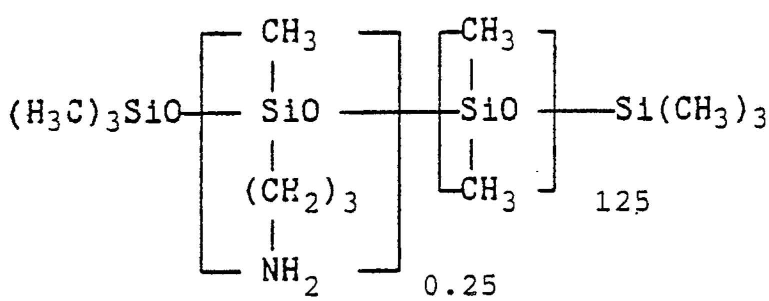

Amino group-containing organopolysiloxane D;

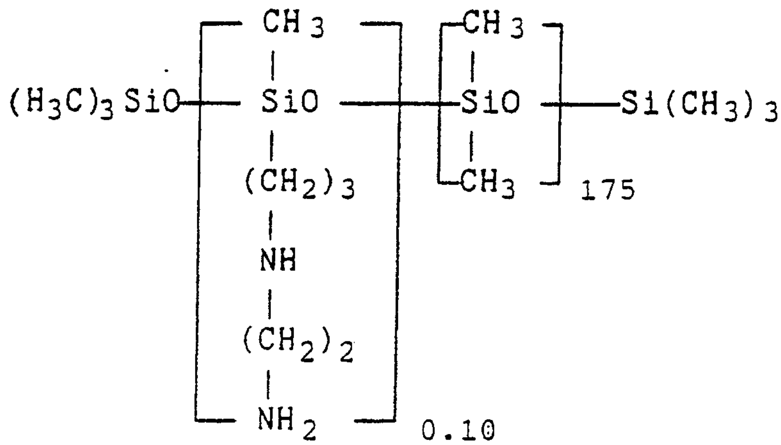

Amino group-containing organopolysiloxane E;

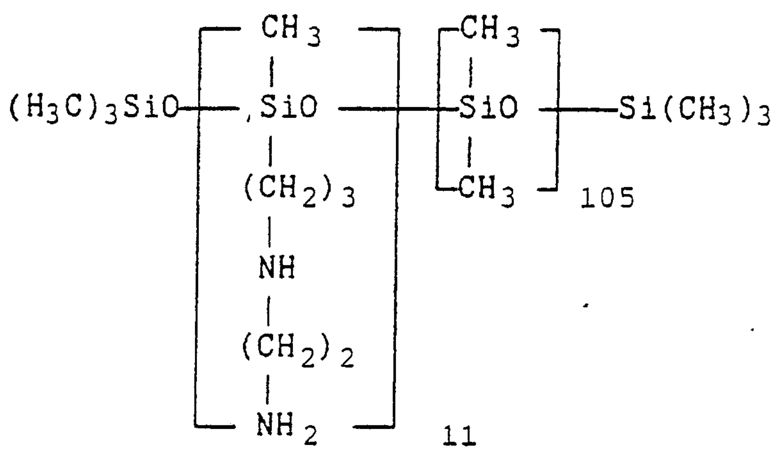

Amino group-containing organopolysiloxane F;

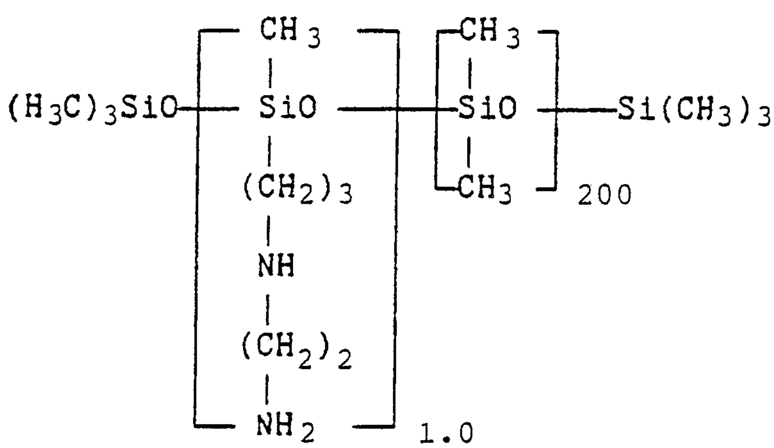

Amino group-containing organopolysiloxane G;

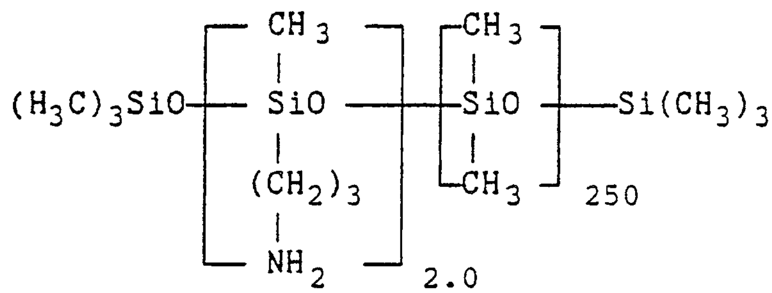

Hydroxyl group-containing organopolysiloxane A;

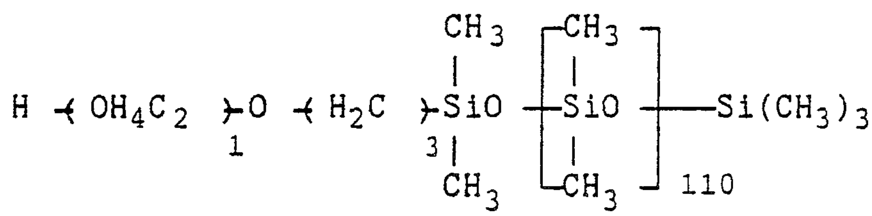

Hydroxyl group-containing organopolysiloxane B;

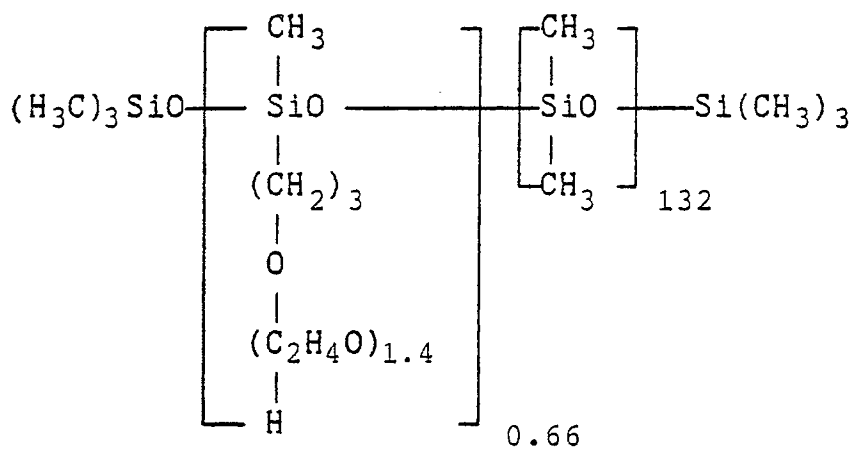

Hydroxyl group-containing organopolysiloxane C;

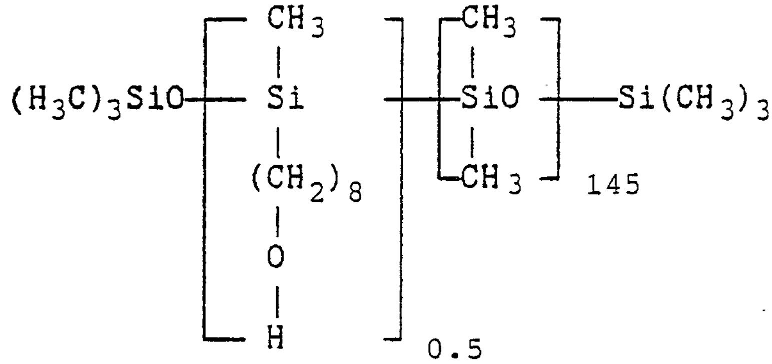

Hydroxyl group-containing organopolysiloxane D;

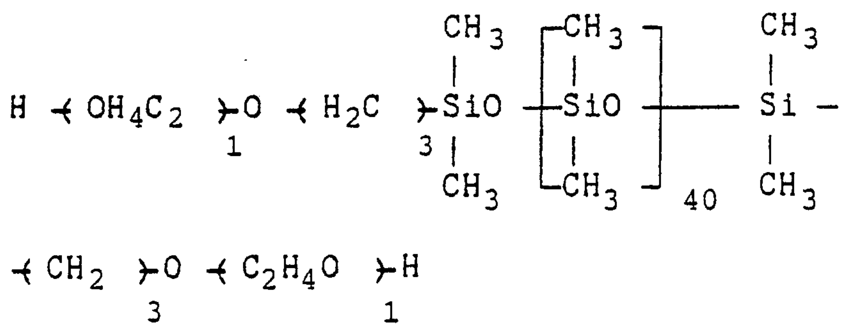

Hydroxyl group-containing organopolysiloxane E;

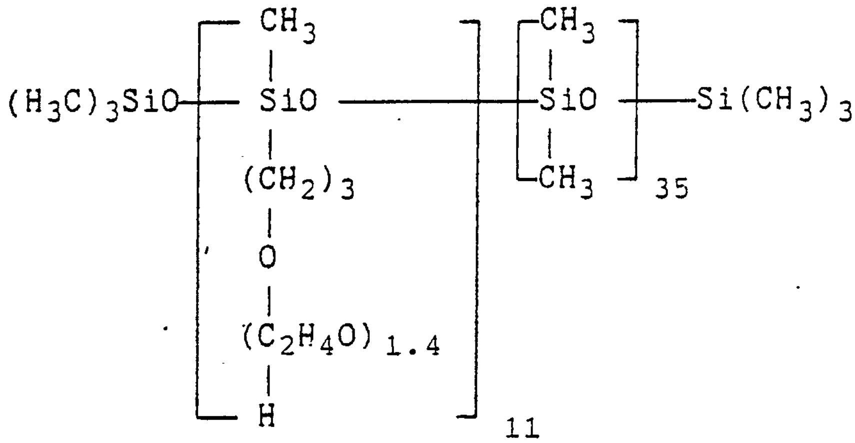

Aromatic amino group-containing organopolysiloxane A;

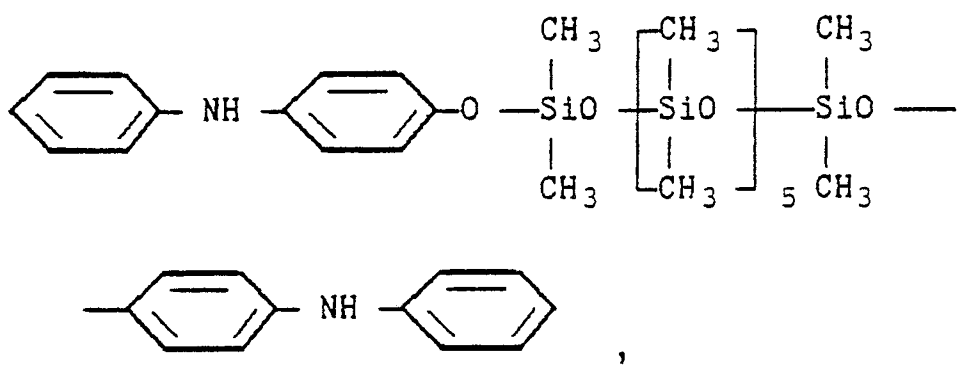

,

Aromatic amino group-containing organopolysiloxane B;

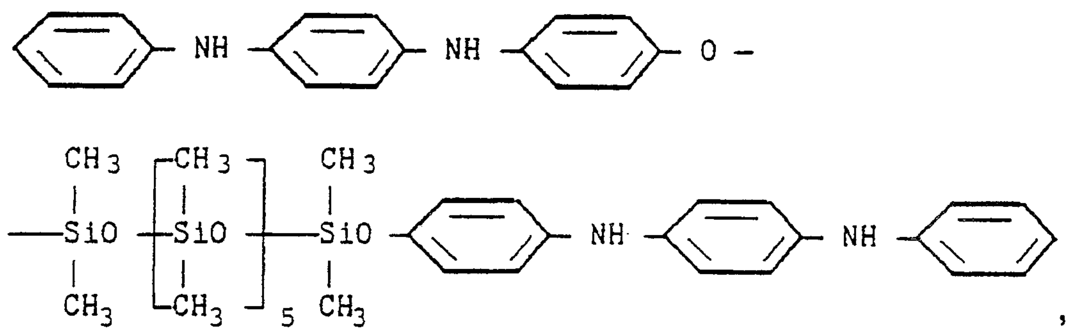

,

Aromatic amino group-containing organopolysiloxane C;

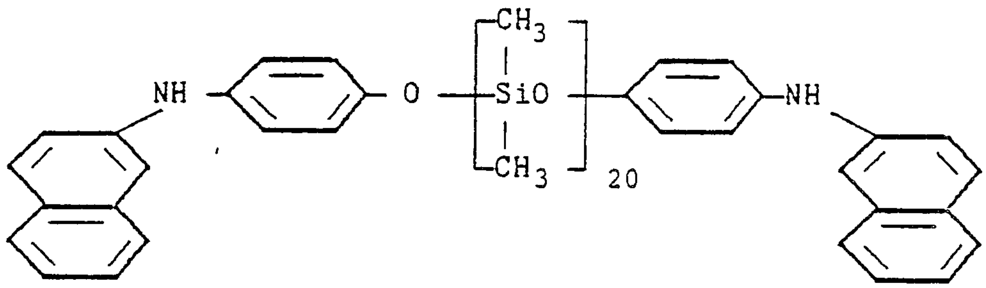

Aromatic amino group-containing organopolysiloxane D;

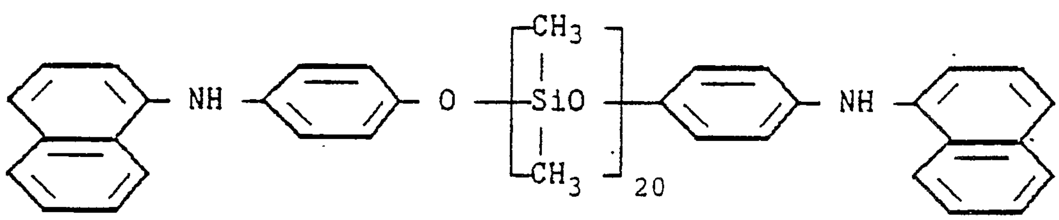

As can be seen from the results obtained in the Examples and the Comparative Examples, the compositions prepared in accordance with this invention underwent a great improvement in thermal resistance.

## Claims

1. A silicone composition prepared by blending

(1) 100 parts by weight of a functional group-containing organopoly-siloxane which is represented by the following general formula (I) and has a viscosity of from 10 to 100,000 cSt at 25 °C:

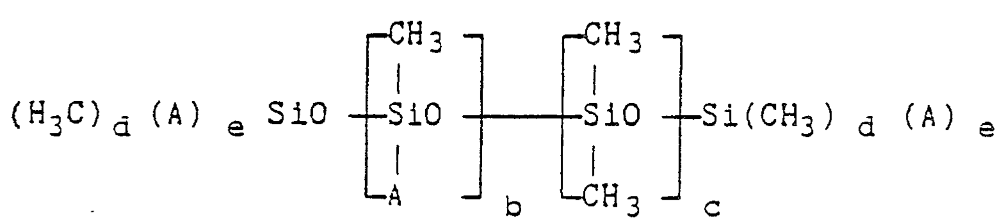

;

wherein A represents $-R^1-X$ or $-R^1-O-Y_f-H$, $R^1$ represents an alkylene group having 1 to 8 carbon atoms, X represents $-N_2$, or $NHR^2NH_2$, $R^2$ represents an alkylene group having 1 to 8 carbon atoms, Y represents an alkyleneoxy group having 2 to 4 carbon atoms; $0 \leq b \leq 10$, $10 \leq c \leq 1{,}000$, d = 2 or 3, e = 0 or 1, provided that d + e = 3, and the case of b = e = 0 is excluded; and $0 \leq f \leq 10$;

(2) from 0.01 to 500 parts by weight of an aromatic amino group-containing organopolysiloxane represented by the following general formula (II):

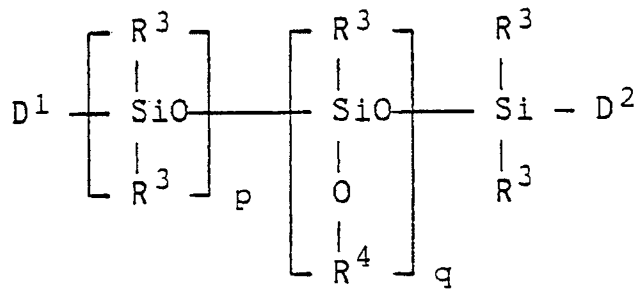

wherein $R^3$ represents an alkyl group having 1 to 8 carbon atoms or aryl group; $R^4$ represents an aromatic amino group selected from among

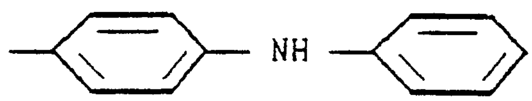

,

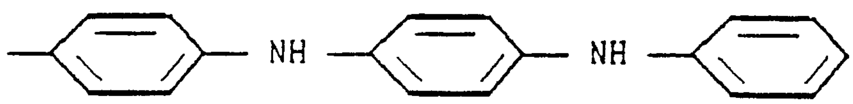

,

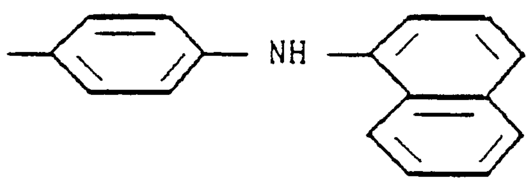

and ,

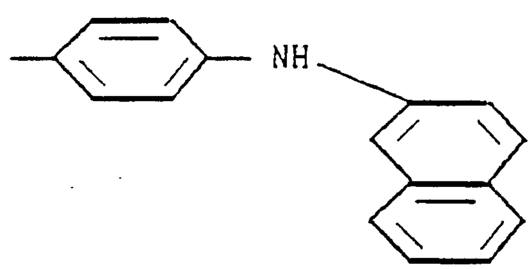

;

$D^1$ and $D^2$ each represents $R^3$ or $-O-R^4$ ;

$0 < p < 100$, $0 < q < 10$, provided that at least either $D^1$ or $D^2$ is $-O-R^4$ when q = 0 ; and

(3) from 0 to 10,000 parts by weight of an organopolysiloxane which is represented by the following general formula (III) and has a viscosity of from 10 to 100,000 cSt at 25 °C:

$$R^5{}_a SiO_{\frac{4-a}{2}}$$

wherein $R^5$ represents an alkyl group having 1 to 8 carbon atoms or an aryl group, and $1.95 < a < 2.20$.

2. A silicone composition as claimed in Claim 1, wherein b is no more than 2.

3. A silicone composition as claimed in Claim 1 or 2, wherein c is from 20 to 500.

4. A silicone composition as claimed in Claim 1, 2 or 3, wherein f is no more than 3.

5. A silicone composition as claimed in any preceding claim, wherein the aromatic amino group-containing organopolysiloxane (II) is present in an amount of from 0.1 to 50 parts by weight per 100 parts by weight of the functional group-containing organopolysiloxane (I).

6. A silicone composition as claimed in any preceding claim, wherein more than 50% of the groups $R^5$ in the nonfunctional organopolysiloxane (III) are methyl groups.

7. A method of improving the thermal resistance of a silicone composition comprising an amino or hydroxyl group-containing organopolysiloxane fluid, which method comprises adding thereto an aromatic amino group-containing organopolysiloxane in a small amount.